# EUROPEAN PATENT APPLICATION

(11) **EP 1 416 373 A2**
(43) Date of publication of application: **06.05.2004**
(21) Application number: 03024591.4
(22) Date of filing: 28.10.2003
(51) Int. Cl.: G06F 7/06

(54) **Method and apparatus to reduce access time in synchronous fifos with zero latency overhead**

(30) Priority: 31.10.2002 IN de10982002
(71) Applicant: STMicroelectronics Pvt. Ltd, Noida 201 301, Uttar Pradesh (IN)
(72) Inventor: Chakravarthy, Kalyana, Noida Road 110096 Delhi (IN); Verma, Jayesh, 110091 Delhi (IN)
(74) Representative: Cerbaro, Elena

(57) **Abstract**

The method and apparatus reduce access time in synchronous FIFOs with zero latency overheads. A FIFO buffer comprises FIFO means (301) storing 'n' data words, each 'm' bits wide, having an 'm' bit wide data input terminal. Furthermore, the FIFO buffer includes read data set selection means (303) connected to the data output terminals of the FIFO means and having two data output terminals providing simultaneous access to a selected storage location at an odd address and an even address. Odd read pointer generating means (304) provide the selection input to the data selection means (303) for selecting data at an odd read address of the read data selection means, while even read pointer generating means (305) provide the input for selecting data at an even read address. Multiplexing means (306) coupled to each of the two data output terminals of the read data set selection means select one of its outputs as the final output of the FIFO. State controlling means (310) coupled to the multiplexing means (306) control the selection of the final output and the selection input to the read data set selection means for selecting an odd read address and an even read address.

## Description

### Field of the Invention

The invention relates to First In First Out (FIFO) memory circuits and more particularly, to providing a method and apparatus for reducing access time in FIFOs with zero latency overhead.

### Background of the invention

Many electronic designs incorporate First In First Out (FIFO) memory circuits as high-speed data buffers. In the majority of these applications the access time and latency of the FIFO are critical to the operation of the application. For this reason, it is desirable to have FIFOs that provide minimum latency and access time.

US Patent 5,388,074 describes a FIFO memory using a single output register. Although the method and apparatus put forth in the patent specification is simple, it has the disadvantage of introducing a latency of one read cycle during memory access. This latency is not acceptable in applications that are latency critical.

US Patent 6067267 describes a four-way interleaved FIFO architecture with look-ahead conditional decoder for PCI applications. The invention suffers from the drawback that the arrangement of registers in the memory banks as proposed is more suitable to a particular type of application, for example PCI. The architecture is not scalable to other kind of memory architectures.

### Objects and summary of the Invention

The object of this invention is to obviate the above drawbacks in the prior art and provide a method and apparatus for reducing access time in FIFOs without introducing any latency overhead.

Another object of the invention is to provide a method and apparatus for reducing access time without latency overhead that is extendable to existing memories without significant modification in the basic architecture of the memories.

Yet another object of the invention is to provide a method and apparatus for reducing memory access time that is portable to different technologies.

To achieve these and other objects, the invention provides method and apparatus as defined in claims 1 and 5, respectively.

In the embodiment of the invention, the FIFO buffer comprises FIFO means capable of storing 'n' data words, each 'm' bits wide, having an 'm' bit wide data input terminal. The FIFO means have two sets of data output terminals each providing simultaneous access to half the number of storage locations, one set connected to the storage locations at odd addresses and the other connected to storage locations at even addresses. The output of the FIFO means is connected to a data selection means. The data selection means selects two data outputs corresponding to the value of the addresses on its selection buses. Odd read pointer generating means provides address to one selection bus, while even read pointer generation means provides address to other selection bus. The two outputs of data selection means are coupled to a multiplexing means. A state controlling means controls the output of the multiplexing means. The state controlling means also controls odd read pointer means and even read pointer means.

### Brief description of the accompanying drawings

The objects and advantages of the invention will become more apparent with reference to the following description and accompanying drawings, wherein:
- **Figure 1**: shows a conventional circuit arrangement of FIFO memory using single output register.
- **Figure 2**: shows a conventional circuit arrangement of four-way interleaved FIFO architecture with look-ahead conditional decoder for PCI applications.
- **Figure 3**: shows the circuit arrangement as provided by the present invention.
- **Figure 4**: shows a timing diagram illustrating the operation of the present invention.

### Detailed description of the Invention

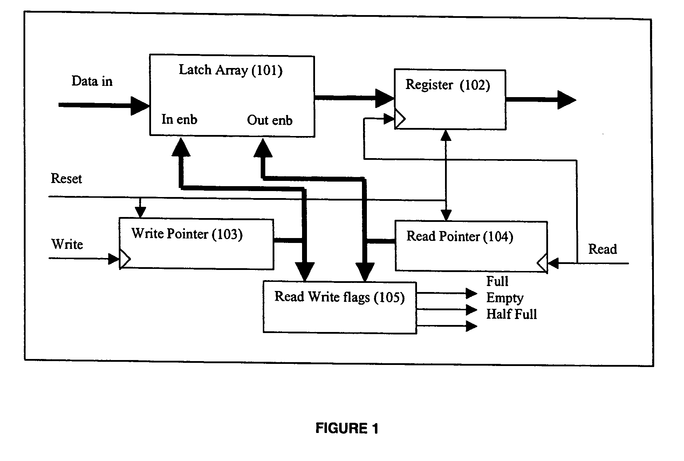

**Figure 1** shows a conventional circuit arrangement of FIFO memory using a single output register as described in patent US 5,388,074. The system consists of a memory latch array **101,** a write pointer logic circuit **103,** a read pointer logic circuit **104** and a flag generation circuit **105.** In addition, register **102** provides for increasing the speed of operation of the system. Latch array **101** consists of an array of n-bit latches in which the data is stored when the write pointer logic circuit **103** receives a "write" signal. The write pointers or the address signals pointing to a location in the latch array 101 are provided by the write pointer logic circuit on one branch of the signal bus going to the "In enb" pin of the latch array **101** to select the latch into which the data is to be stored by the write pointer logic circuit **103**. The signal bus also goes to Read Write Flags **105** to generate full, empty and half full flags.

Similarly, Read pointers or the address signals pointing to the latch array **101** location to be read are provided by the read pointer logic circuit **104** on one branch of the signal array going to the "Out enb" pin of the latch array **101**. The signal bus also goes to Read Write flags **105** to generate full, empty and half-full flags.

The register **102** is an n-bit wide register array, which receives input from the output of latch array **101**. The register array **102** is clocked by the Read signal. The access time obtained at the output of the system is the small clock to output (cp to Q) delay of the flip-flop.

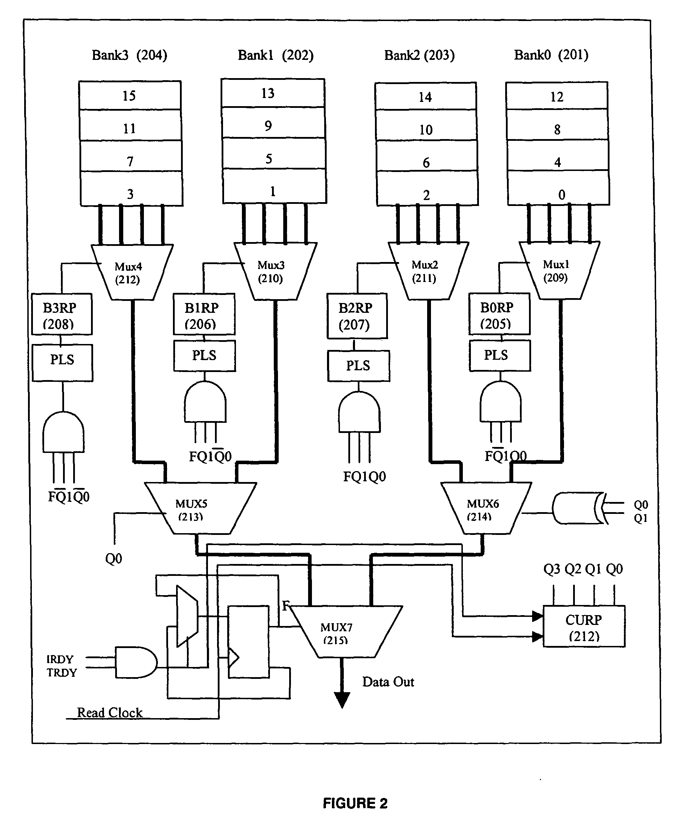

**Figure 2** shows a conventional circuit arrangement for a four-way interleaved FIFO architecture with look-ahead conditional decoder for PCI applications as described in US patent 6,067,267. The architecture consists of four subarrays each of four 32-bit registers banks Bank0 **201,** Bank1 **202,** Bank2 **203,** and Bank3 **204.** The subarray comprising Bank3 **204** which includes registers 3,7,11,15 and Bank1 **202** which includes registers 1,5,9,13 is called the "Odd subarray" while the subarray comprising Bank2 **203** which includes registers 2,6,10,14 and Bank0 **201** which includes registers 0,4,8,12 is called the "Even subarray". The output of each of these subarrays is connected to an independent 4:1 multiplexer. In other words, Bank3 **204** is connected to Mux4 **212,** Bank2 **203** to Mux2 **211**, Bank1 **201** to Mux3 **210** and Bank0 **201** to Mux1 **209.** The output of Mux4 **212** and Mux3 **210** is further connected to a 2:1 multiplexer Mux5 **213,** while the output of Mux2 **211** and Mux1 **209** is connected to Mux6 **214.** Finally the output of Mux5 **213** and Mux6 **214** is multiplexed by another 2:1 multiplexer Mux7 **215** whose output is the final data out. A 4-bit (Q3Q2Q1Q0) current pointer CURP **212** (a 4 bit binary counter with TrdyIrdy) as count enable, points to the location to be read. It is initially set to "0000". At a clock edge when TrdyIrdy goes high, the 32-bit data corresponding to register 0 is supplied as data out. As long as the TrdyIrdy is high, CURP increments at each clock edge.

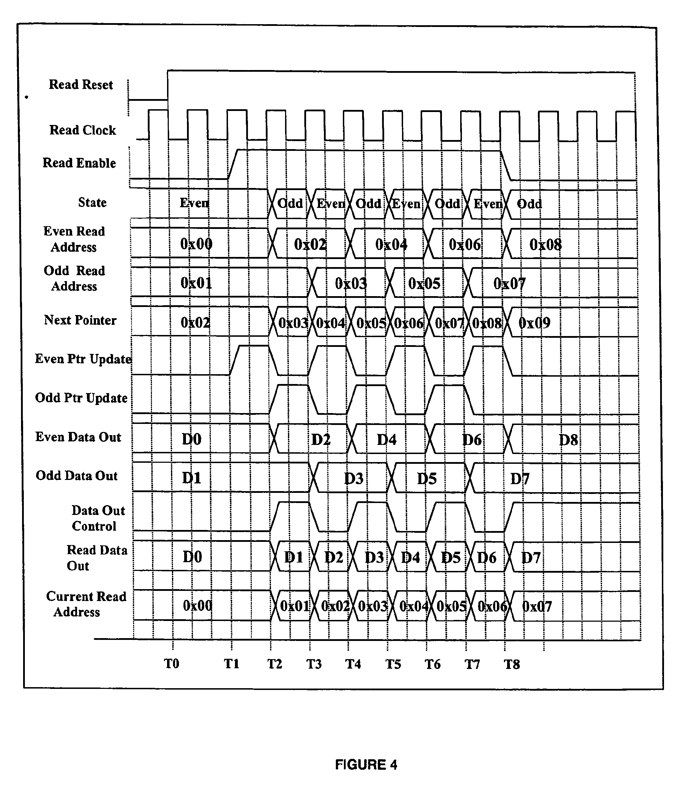

Each bank read pointer B0RP **205,** B1RP **206,** B2RP 207, B3RP **208** increments to the next four registers of its associated bank, once every four clock cycles. Each bank read pointer B0RP **205,** B1RP **206,** B2RP **207,** B3RP **208** increments at one value of the two-bit combination Q1Q0. For example, the incrementing of the two bit bank "0" read pointer B0RP **205** is triggered by a signal from "PLS" generator when Q1Q0 = "01", that of the bank "1" read pointer B1RP **206** at Q1Q0 = "10", bank "2" read pointer B2RP **207** at Q1Q0 = "11" and bank "3" read pointer B3RP **208** at Q1Q0 = "00". The flip-flop output "F" is the Q0 output shown in Fig 4A and is controlled by the TrdyIrdy signal. "F" or "Q0", is high whenever any of the AND gates triggers a PLS generator to supply a signal to its associated bank read pointer **205, 206, 207, 208** to increment, when the decoder is also enabled to supply its output. The flip-flop output **"F"** is part of external circuitry connected to the FIFO.

A two-bit bank read pointer selects (through Mux4 **212,** Mux3 **210,** Mux2 **211,** Mux1 **209)** which register of each bank is to be read. Bank 0 read pointer B0RP **205,** first selects one of the four 32-bit registers of Bank0 **201,** for example, register 0. Similarly B1RP **206** first selects register 1 of Bank1 **202,** B2RP **207** first selects register 2 of Bank2 **203** and B3RP **208** first selects register 3 of Bank3 **204**. Each of the four bank read pointers increment after 4 clock cycles, and points to the next register in its bank. Therefore data is held for 4 clock cycles at the output of each bank.

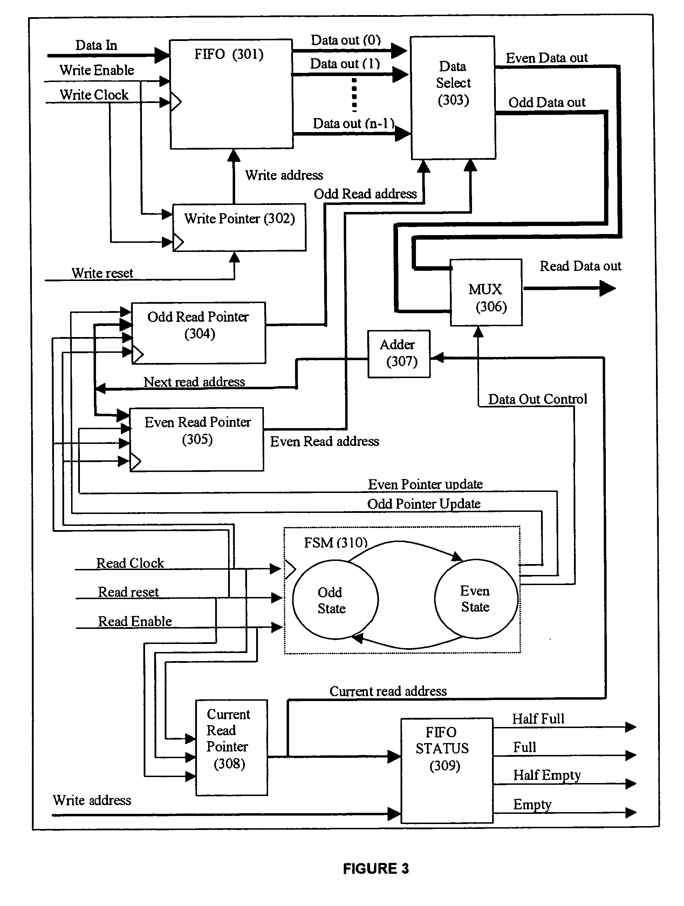

**Figure 3** shows the circuit arrangement as provided by the present invention to overcome the disadvantages of the aforementioned conventional circuit arrangements. The system provided by the invention consists of a FIFO **301,** which comprises an array of memory elements 'm' bits wide and 'n' bits deep. The 'm' bit wide data to be written into the FIFO is available on the 'Data In' bus. The write address bus points to the location in the FIFO into which the data is to be written. The write pointer circuit **302** generates the write address that is put on the Write address bus. The write address bus is 'k' bits wide, such that n=2^{k}. The contents of the 'Data In' bus are transferred into the FIFO element whose address is specified by the write address bus, when the write enable is at logic '1' and a rising edge occurs on the write clock. The write pointer is reset by setting the write address bus to zero when the write reset signal is active. The contents of the write address bus are incremented when the write reset is inactive, write enable is active and a rising edge occurs on write clock.

The data from individual FIFO elements is available on 'n' 'm' bit wide data buses from 'Data out (0)' to 'Data out (n-1)'. All the 'n' Data out buses are connected to the Data select circuit **303**. The Data Select **303** has two output ports "Even Data Out" and "Odd Data Out". The "Even Data Out" bus contains the 'Data out' bus corresponding to the 'Even read address' while the "Odd data out" selects the data out bus corresponding to the 'Odd read address'. The "Even Data out" and "Odd Data out" from the 'Data Select' **303** are connected to 'MUX' **306**, which assigns one of the inputs to the "Read Data out" bus. The "Data Out Control" pin from the FSM **307** controls 'MUX' **306**. The contents of "Even Data out" are assigned to "Data out" when the "Data out control" is at logic '0', while contents of "Odd Data Out"' are assigned to "Data out" when the "Data out control" is at logic '1'. 'Odd Read Pointer' **304** and 'Even Read Pointer' **305** circuits generate the "Odd Read Address" and "Even Read Address" buses respectively. The 'Odd Read Pointer' **304** counts the odd addresses such as 1,3,5 etc and the 'Even Read Pointer' 305 counts the even address such as 0,2,4, etc.

Odd Read pointer circuit **304** forces "0x01" on the "Odd Read Address' bus when the 'read reset' signal is activated. The contents of the bus "Next Read Address" are assigned to "Odd Read Address" by the "Odd Read Pointer" **304** circuit, only when 'read reset' is inactive, 'odd pointer update' is '1' and there is a rising edge on read clock. The current contents of the 'odd read address' are not changed when 'odd pointer update' is at logic '0'.

Even Read pointer circuit **305** forces "0x00" on the 'even read address' bus when the 'read reset' signal is activated. The contents of the 'next read address' bus are assigned to 'Even read address' by the even read pointer **305** circuit, only when read reset is inactive, even pointer update is '1' and rising edge on read clock. The current contents of the 'Even read address' are not changed when even pointer update is at logic '0'.

The Current read pointer circuit **308** generates current read address of the FIFO from which the data is accessed. The current read address is provided to the FIFO status circuit **309** along with the write address bus to generate FIFO status signals like full, empty, half full etc. The current read address is also provided to adder **307**. Adder **307** generates the next read address by incrementing the contents of the current read address bus and outputs it on the 'next read address' bus. The contents of the 'current read address' bus are forced to 0x00 by the current read pointer circuit **308** when read reset is active. The next read address is generated when Read reset is inactive, read enable is at logic '1' and there is a rising edge on the read clock.

The read process is coordinated by a Finite state machine 'FSM' **310**. The FSM **310** has two states viz., Odd and Even. When the Read reset is active, the FSM goes to 'Even' state. It toggles the state when Read reset is inactive, read enable is high and a rising edge occurs on the Read clock. The 'Data Out Control' is at logic '0' when the FSM is in even state, while it is at logic '1' when FSM is in odd state. The Even pointer Update is at logic '1' when FSM is in Even state and Read enable at logic '1'. The odd pointer update is at logic '1' when FSM is in Odd state and read enable at logic '1'

**Figure 4** shows a timing diagram illustrating the operation of the present invention. Initially, the read reset is inactivated at time T0. The initializations would have already taken place. The contents of different buses at time T0 are as follows.
- Current read address to 0x00
- State machine to Even state
- Even read address to 0x00
- Odd read address to 0x01
- Next pointer = 0x02 (current read address +2)
- Data out control to '0'
- Even data out is data contained in the FIFO element D0
- Odd data out is data contained in the FIFO element D1
- Read data out contains data D0.

### At time T1

The read enable goes to logic '1', the 'Even pointer update' signal also goes to logic '1'. The contents of the buses are not updated since there is no rising read clock edge.

### At time T2

A rising read clock edge is present when read enable is at logic '1'. The contents of different buses are changed as follows
- Current read address to 0x01
- State machine to Odd state
- Even read address to 0x02
- Odd read address remains unchanged at 0x01
- Next pointer = 0x03 (current read address +2)
- Data out control to '1'
- Odd pointer update is at '1'
- Even pointer update is at '0'
- Even data out is data contained in the FIFO element D2
- Odd data out remains unchanged and contains the data contained in the FIFO element D1
- Read Data out contains data D1

In the absence of the current architecture, at time T2 following events occur: the current read pointer is updated (to 0x01), the updated value is decoded and the contents of the selected data element (D1) are assigned to data out. This process consumes time, affecting the access time of the FIFO. The total time required for the word access includes the time required to decode logic of the address, AND ― OR logic required to force the contents of the selected FIFO element on the data out bus and CP to Q delay of the flip flops in the counter. However, the present invention reduces the overall access time by providing a method of look ahead reading that is implemented by fetching the next word from the FIFO and assigning it to the other data out bus (Even data out or Odd data out), the contents of which are not used at the current instant. This scheme gives a timing advantage of 2 read clock cycles for reading data from the FIFO. Therefore, the proposed architecture is able to avoid any latency over head. Furthermore, since the state machine is implemented using a single D-flip flop, the time required for word access with the current architecture is only the CP to Q delay of the flip flop in the state machine plus the MUX delay --- which is significantly smaller than earlier.

The events occurring at times T3, T4, T5, T6, T7 and T8 represented in the timing diagram can be explained similarly.

The description of the present invention has been presented for purposes of illustration and is not intended to be exhaustive or limited to the invention in the form disclosed. Many modifications and variations will be apparent to those of ordinary skill in the art, within the scope of the invention as defined by the claims.

## Claims

1. A FIFO buffer, **characterized by**:
- FIFO means (301) storing 'n' data words, each 'm' bits wide, having an 'm' bit wide data input terminal,
- read data selection means (303) connected to data output terminals of the FIFO means and having two data output terminals providing simultaneous access to a selected storage location,
- odd read pointer generating means (304) providing the selection input to the data selection means for selecting data at an odd read address,
- even read pointer generating means (305) providing the selection input to the data selection means for selecting data at an even read address,
- multiplexing means (306) coupled to each of the two data output terminals of the read data selection means for selecting one of the outputs of the read data selection means as the final output of the FIFO, and
- state controlling means (310) coupled to the multiplexing means and controlling the selection of the final FIFO output and to the odd and even read pointer generating means.

2. A FIFO buffer as claimed in claim 1, further comprising FIFO status providing means coupled to a selected read pointer means for generating FIFO status signals.

3. A FIFO buffer as claimed in claim 1 or 2, further comprising adder means coupled to the selected read pointer generating means to increment the read address for generating the next read address.

4. A FIFO buffer as claimed in any of claims 1-3, wherein said state maintaining means have two states including odd and even states.

5. A method for reducing the access times of a FIFO buffer, **characterized by** the steps of:
- providing a FIFO for storing 'n' data words, each 'm' bits wide, having an 'm' bit wide data input terminal,
- connecting a read data selector to output of the FIFO and providing simultaneous access to a selected storage location at an odd address and a selected storage location at an even address,
- providing selection inputs to the read data selector for selecting an odd read address and an even read address,
- multiplexing the output of the read data selector to enable selection of a desired one of the outputs of the read data selector as the final output of the FIFO, and
- controlling the state of the FIFO to select one of the multiplexer output as the final output of the FIFO and to control the selection input to the read data selector for selecting an odd read address and an even read address.

6. A method for providing a FIFO buffer as claimed in claim 5, further comprising generating FIFO status signals.

7. A method for providing a FIFO buffer as claimed in claim 5 or 6, further comprising generating the next read address by incrementing the current read address.

8. A method for providing a FIFO buffer as claimed in any of claims 5-7, wherein said state can be odd or even.
